Europäisches Patentamt

European Patent Office

Office européen des brevets

(19)

(11) Numéro de publication: **0 357 506**
**A1**

(12)

# DEMANDE DE BREVET EUROPEEN

(21) Numéro de dépôt: **89402364.7**

(22) Date de dépôt: **30.08.89**

(51) Int. Cl.⁵: **B 01 D 53/36**
B 01 J 35/02, C 01 B 17/04

(30) Priorité: **02.09.88 FR 8811494**

(43) Date de publication de la demande:
**07.03.90 Bulletin 90/10**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Hebrard, Jean-Luc**
**31, rue Dauphine**
**F-75006 Paris (FR)**

**Quemere, Eric**
**11 bis, rue du Martray**
**F-95240 Cormeilles-en-Parisis (FR)**

(74) Mandataire: **Dutruc-Rosset, Marie-Claude et al**
**RHONE-POULENC CHIMIE Service Brevets Chimie 25,**
**Quai Paul Doumer**
**F-92408 Courbevoie Cédex (FR)**

(54) Catalyseurs pour le traitement des effluents gazeux et procédé de traitement de ces effluents.

(57) La présente invention concerne des catalyseurs pour le traitement de gaz contenant des composés soufrés. Les catalyseurs préférés de l'invention qui comprennent comme composé essentiel, un élément catalytiquement actif pour la réaction d'oxydation de l'hydrogène sulfuré en soufre, anhydride sulfureux ou anhydride sulfurique, ont une forme polylobée concave, de préférence trilobée ou quadrilobée. Cette forme permet d'améliorer les rendements de conversion des composés soufrés.

EP 0 357 506 A1

Bundesdruckerei Berlin

## Description

# CATALYSEURS POUR LE TRAITEMENT DES EFFLUENTS GAZEUX ET PROCEDE DE TRAITEMENT DE CES EFFLUENTS

La présente invention concerne des catalyseurs pour le traitement de gaz, notamment des effluents gazeux industriels, contenant des composés soufrés, en vue de la transformation catalytique de ces composés soufrés en composés facilement éliminables.

Elle concerne plus particulièrement des catalyseurs pour l'oxydation directe en soufre, $SO_2$ et/ou $SO_3$ de l'hydrogène sulfureux, ou des composés carbonés du soufre.

Certains effluents industriels et en particulier les effluents provenant des unités Claus, appelés également "gaz de queue", contiennent du soufre et/ou des composés polluants oxydables du soufre qui doivent être traités pour être transformés par oxydation en composés aisément eliminables comme l'anhydride sulfureux et/ou l'anhydride sulfurique.

Les composés du soufre notamment présents dans ces effluents sont principalement l'hydrogène sulfuré et des composés organiques du soufre tels que le sulfure de carbone, l'oxysulfure de carbone et/ou des mercaptans.

Ces effluents peuvent être également traités pour transformer les composés du soufre, en soufre élémentaire, par oxydation directe, le soufre élémentaire étant aisément éliminable ou récupérable, par exemple, par condensation.

Plusieurs procédés d'oxydation de ces composés sont déjà connus. Le plus simple de ces procédés consiste à brûler à hautes températures les effluents.

Toutefois, quand la teneur en hydrogène sulfuré est trop basse, il est difficile de maintenir une température de flamme suffisante pour obtenir une combustion stable des composés soufrés.

Pour traiter ces gaz à concentration basse en hydrogène sulfuré, il a été proposé des procédés catalytiques d'oxydation des composés soufrés en S, $SO_2$ ou $SO_3$.

Parmi les catalyseurs proposés, les catalyseurs à base d'oxyde de titane apparaissent très performants. A titre d'exemple, on peut citer les brevets européens 115449, 60742, 78690 qui décrivent différents catalyseurs à base d'oxyde de titane utilisés dans l'oxydation de l'hydrogène sulfuré.

D'autres catalyseurs ont également été proposés. Ainsi, le brevet US n° 4092404 décrit un catalyseur d'oxydation à base de vanadium, le brevet européen n° 39266, un catalyseur à base de fer. Ces catalyseurs sont généralement utilisés sous forme de lit constitué par un ensemble de particules disposé dans une colonne, ce lit étant traverse par le flux du gaz à traiter.

Les lits de catalyseur sont constitués, jusqu'à présent, de particules de catalyseur sous forme de granulés cylindriques ou sphériques formés par moulage ou extrusion. Toutefois, la quantité de catalyseur qu'il est possible d'introduire dans une colonne ou un convertisseur est limitée par la perte de charge induite par celui-ci, ce qui entraîne un rendement de l'oxydation des composés du soufre inferieur au rendement théorique calculé par les lois thermodynamiques.

La présente invention a notamment pour but de remédier à cet inconvénient en proposant un catalyseur façonné ayant de préférence une forme polylobée permettant d'obtenir pour un coefficient de remplissage identique des convertisseurs, une pertes de charge plus faible.

De plus, les catalyseurs façonnés de l'invention présentent des performances catalytiques nettement améliorées pour l'oxydation des composés soufrés et notamment de l'hydrogène sulfuré ou des composés carbonés du soufre.

Cette amélioration peut s'expliquer par le fait que les réactions d'oxydation sont limitées par des phénomènes de diffusion de la matière dans les particules de catalyseur.

De ce fait, tous les sites catalytiquement actifs de la particule de catalyseur ne sont pas en contact avec les gaz à traiter, notamment ceux situés au coeur de la particule. Ainsi, l'activité théorique du catalyseur ne peut être obtenue.

A cet effet, l'invention propose un catalyseur façonné pour le traitement de gaz contenant des composés soufrés en vue de l'oxydation de ces composés en composés soufrés aisément eliminables et notamment en soufre élémentaire, $SO_2$ et/ou $SO_3$, comprenant comme composant essentiel un élément catalyseur de la réaction d'oxydation de ces composés soufrés, caractérisé en ce que qu'il est conformé de telle sorte qu'il présente un rapport entre sa surface externe et son volume élevé, supérieur ou égal à 2 $mm^{-1}$ et de préférence compris entre 3 et 8 $mm^{-1}$.

Un mode de réalisation préférentielle de l'invention consiste en un catalyseur façonné à section transversale en forme polylobée concave.

Selon une première variante de l'invention, la section transversale du catalyseur est circonscrite dans un cercle de diamètre compris entre 0,8 mm et 12 mm, de préférence entre 1,2 mm et 9 mm environ. Les lobes de la section transversale sont, de preference, identiques en dimensions et/ou en forme.

Selon une seconde variante de l'invention, la section transversale du catalyseur est circonscrite dans un ovale de grand axe compris entre 2 mm et 9 mm environ, et de petit axe compris entre 1,2 mm et 7 mm environ. Au moins un des lobes de la forme polylobée est différent en forme et/ou en dimensions des autres lobes. De préférence, les lobes sont identiques deux à deux, avantageusement les lobes identiques ne sont pas adjacents.

Selon une autre caractéristique de l'invention, commune aux deux variantes définies ci-dessus, les lobes de la forme polylobée sont sécants. Toutefois, dans une variante de réalisation de l'invention, au moins deux lobes adjacents de la forme polylobée ne sont pas sécants.

Selon des modes de réalisation préférés de l'invention, les formes polylobées sont soit des formes trilobées, sont des formes quadrilobées.

Selon une nouvelle caractéristique de l'invention, le catalyseur présente dans sa section transversale au moins une ouverture ou canal longitudinal débouchant aux deux extrémités du catalyseur, cette ouverture étant de préférence de forme cylindrique.

Dans un mode de réalisation préféré, le catalyseur comporte un canal central et un canal au centre de chaque lobe.

Un autre mode de mise en oeuvre de l'invention consiste en un catalyseur sous forme cylindrique présentant dans sa section transversale au moins une ouverture ou canal longitudinal débouchant aux deux extrémités du catalyseur, cette ouverture étant de préférence, de forme cylindrique.

A titre illustratif, on peut citer un catalyseur se présentant sous forme d'extrudés cylindriques ayant un diamètre entre 3 et 5 mm et une longueur variant entre 4 et 8 mm et percés par une ouverture ayant un diamètre représentant de 1/3 à 2/3 de leur diamètre.

Le catalyseur de l'invention comprend comme composant essentiel un élément catalytiquement actif choisi dans le groupe comprenant l'oxyde d'aluminium, l'oxyde de titane, l'oxyde de cérium, l'oxyde de zirconium, ou un mélange de ceux-ci. La proportion pondérale de l'élément catalytiquement actif par rapport au poids total du catalyseur fini peut varier de 0,5 à 100 % et de préférence de 60 à 99 % environ.

A titre d'exemple, l'oxyde de titane peut être utilisé seul ou en mélange avec plusieurs oxydes tels que l'alumine, la silice, l'oxyde de zirconium, l'oxyde de cérium, l'oxyde d'étain, les oxydes de terres rares trivalents, l'oxyde de molybdène, l'oxyde de cobalt, l'oxyde de nickel, l'oxyde de fer ou analogues. Il en est de même pour l'oxyde de cérium, l'oxyde de zirconium et l'alumine.

Les oxydes d'éléments catalytiquement actifs décrits ci-dessus convenables pour l'invention sont tous les oxydes de ces éléments quel que soit leur mode de préparation ou leur origine.

Les catalyseurs de l'invention peuvent, en outre, comprendre un ou plusieurs constituants choisis parmi les argiles, silicates, sulfates d'un métal alcalino-terreux, ou d'ammonium, les fibres céramiques, amiante, silice.

Ils peuvent également comprendre des additifs pour faciliter la mise en forme et des additifs pour améliorer leurs propriétés mécaniques finales.

A titre d'exemple d'additifs, on peut citer notamment : la cellulose, la carboxyméthyl-cellulose, la carboxyméthyl-cellulose du tall-oil, les gommes xanthane, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

Selon un autre mode de réalisation de l'invention, l'élément catalytiquement actif est imprégné sur un support généralement réfractaire.

A titre d'exemple de support convenable, on peut citer l'alumine, la silice, l'oxyde de cérium, l'oxyde de zirconium, l'oxyde de titane.

Le catalyseur de l'invention peut être préparé selon les différentes techniques connues de fabrication des catalyseurs, puis conformé à la forme de l'invention.

Ainsi à titre d'exemple, le catalyseur peut être obtenu par malaxage des différents constituants du catalyseur et extrusion de la pâte minérale obtenue. On peut obtenir soit un catalyseur dit "massique" contenant l'oxyde de l'élément catalytiquement actif lié ou non à l'un au moins des oxydes tels que l'alumine, l'oxyde de zirconium, la silice, l'oxyde de cérium, l'oxyde d'étain, l'oxyde de titane ou les oxydes de terres rares trivalents, soit un catalyseur dit "imprégné" obtenu par imprégnation par une solution d'un composé d'aluminium, de zirconium, de cérium, d'étain, de titane, de terres rares ou d'autres composés constitués de l'oxyde de l'élément catalytiquement actif, par exemple l'oxyde de titane d'un support conformé à une forme selon l'invention.

Ces exemples de fabrication ne sont donnés qu'à titre d'illustration et il est possible, sans pour cela sortir de l'invention, d'utiliser toutes méthodes permettant de conformer une poudre ou une pâte à une forme particulière, telles que par exemple le moulage, le compactage.

Le procédé d'oxydation en soufre, $SO_2$ et/ou $SO_3$ de l'hydrogène sulfuré, des composés du soufre et éventuellement du soufre en phase gazeuse en présence d'un catalyseur de l'invention peut être réalisé par mise en contact d'un gaz renfermant de l'oxygène avec l'effluent contenant les produits soufrés. Ce gaz est généralement de l'air, éventuellement de l'air enrichi en oxygène ou de l'oxygène pur.

La quantité de gaz est telle que la quantité d'oxygène soit au moins égale et de préférence supérieure à la quantité stoechiométrique nécessaire pour l'oxydation en S, $SO_2$ et/ou $SO_3$ de la totalité des composés soufrés.

Le procédé de l'invention est mis en oeuvre à des températures supérieures à 150°C et de préférence à des températures comprises entre 200°C et 550°C.

La composition des effluents peut varier dans de larges limites. Généralement les effluents contiennent moins de 15 % en volume d'hydrogène sulfuré et de préférence de 0,5 à 10 % en volume.

D'autres caractéristiques, avantages et buts de l'invention apparaîtront plus clairement au vu des exemples donnés ci-dessous uniquement à titre d'illustration.

Example 1 : (catalyseur A)

On ajoute à une suspension d'oxyde de titane obtenue après hydrolyse et filtration dans le procédé classique d'attaque sulfurique de l'ilmenite, une suspension de chaux pour neutraliser la totalité des sulfates. La suspension est séchée à 150°C pendant 1 heure. Le poudre obtenue est malaxée en présence d'eau et d'acide nitrique dans les proportions suivantes :

- poudre $TiO_2$ : 58 %

- HNO$_3$ : 2 %
- H$_2$O : 40 %

La pâte ainsi obtenue est extrudée au travers d'une filière pour obtenir des extrudes ayant une forme trilobée dont le diamètre du cercle circonscrit est de 4 mm et les lobes sécants et identiques ont un diamètre de 1,8 mm.

Apres séchage à 120°C et calcination à 450°C, les extrudes ont les caractéristiques suivantes :
- diamètre du cercle circonscrit : 3,5 mm
- surface specifique : 120 m$^2$/g
- volume poreux total : 0,35 cm$^3$/g

Exemple 2 : (catalyseur B)

Avec la pâte de l'exemple 1, on fabrique des extrudés ayant une forme trilobée dont le diamètre du cercle circonscrit est de 1,5 mm et les lobes sécants et identiques ont un diamètre de 0,8 mm.

Après séchage à 120°C et calcination à 450°C, les extrudés ont les caractéristiques suivantes :
- diamètre du cercle circonscrit : 1,5 mm
- surface spécifique (BET) : 124 m$^2$/g
- volume poreux total : 0,32 cm$^3$/g

Exemple 3 : (catalyseur C)

La pâte de l'exemple 1 est extrudée à travers une filière pour obtenir une forme quadrilobée dont les lobes opposés sont identiques et dont la section transversale est circonscrite dans un ovale de grand axe égal à 4 mm et de petit axe égal à 2 mm. Le diamètre des grands lobes est de 1,8 mm, celui des petits lobes est égal à 1 mm.

Après séchage à 120°C et calcination à 450°C, les extrudés ont les caractéristiques suivantes :
- grand axe de l'ovale : 4 mm
- petit axe de l'ovale : 2 mm
- surface spécifique : 116 m$^2$/g
- volume poreux : 0,35 cm$^3$/g

Exemple comparatif : (catalyseur D)

On réalise une pâte comme dans l'exemple 1. Cette pâte est ensuite extrudée à travers une filière cylindrique de diamètre 4 mm.

Les extrudés obtenus sont séchés à 120°C, puis calcinés à 450°C.

Le catalyseur D a les caractéristiques suivantes :
- diamètre : 3,5 mm
- surface spécifique : 120 m$^2$/g
- volume poreux total : 0,35 cm$^3$/g

Tests catalytiques :

Ce test catalytique a pour but de comparer les activités des catalyseurs exemplifiés en oxydation directe de l'hydrogène sulfuré en soufre, SO$_2$ ou SO$_3$.

On introduit dans un réacteur un gaz ayant la composition suivante en volume.
H$_2$S : 1 %
O$_2$ : 0,5 %
H$_2$O : 7 %
N$_2$ : 91,5 %

En fonctionnement isotherme, à une température de 200° et pour un volume identique de réacteur rempli de catalyseur, la vitesse volumique des gaz est égale à 7200 h$^{-1}$ calculée dans les conditions normales de température et de pression.

Le temps de contact des gaz est de 0,5 seconde.

On compare l'activité des catalyseurs en mesurant le taux de transformation de l'hydrogène sulfuré. Les résultats obtenus sont rassemblés dans le tableau I ci-dessous.

| Catalyseur | Conversion H$_2$S |
|---|---|
| A | 40 % |
| B | 44 % |
| C | 38 % |
| D | 30 % |

Un test analogue a été réalisé pour comparer les activités des catalyseurs exemplifés en oxydation des composés carbonés du soufre et plus particulièrement du CS$_2$.

Le gaz traité a la composition suivante, en volume :
CS$_2$ : 0,3 %
O$_2$ : 0,95 %
N$_2$ : 98,75 %

Le fonctionnement du réacteur est identique à celui décrit pour l'oxydation de l'hydrogène sulfuré, toutefois la température est de 300°C.

Comme pour le test ci-dessus, l'activité des catalyseurs est contrôlée par mesure du taux de transformation de CS$_2$. Les résultats sont rassemblés dans le tableau II ci-dessous.

Tableau II

| Catalyseur | Conversion CS$_2$ % |
|---|---|
| A | 53 |
| B | 65 |
| C | 50 |
| D | 29 |

**Revendications**

1. Catalyseur pour le traitement de gaz contenant des composés soufrés comprenant comme compose essentiel un élément catalytiquement actif de la réaction d'oxydation de ces composés soufrés en composés soufrés aisément éliminables, caractérisé en ce qu'il est conformé de telle sorte qu'il présente un rapport entre sa surface externe et son volume supérieur à 2 mm$^{-1}$

2. Catalyseur selon la revendication 1 caractérisé en ce que ledit rapport est compris entre 3 et 8 mm$^{-1}$.

3. Catalyseur selon l'une des revendications 1 et 2 caractérisé en ce qu'il présente une forme polylobée concave.

4. Catalyseur selon la revendication 3, caractérisé en ce que la section transversale dudit catalyseur est circonscrite dans un cercle de diamètre compris entre 0,8 mm et 12 mm, de préférence entre 1,2 mm et 9 mm.

5. Catalyseur selon la revendication 3 ou 4, caractérisé en ce que la section transversale dudit catalyseur est circonscrite dans un ovale de grand axe compris entre 2 mm et 9 mm et de petit axe compris entre 1,2 mm et 7 mm.

6. Catalyseur selon l'une des revendications 3 ou 4, caractérisé en ce que les lobes de la forme polylobée sont identiques en dimensions et/ou en forme.

7. Catalyseur selon l'une des revendications 3 à 5, caractérisé en ce qu'au moins un des lobes de la forme polylobée est différent en forme et/ou en dimensions des autres lobes.

8. Catalyseur selon l'une des revendications 3 à 7, caractérisé en ce qu'au moins deux lobes adjacents de la forme polylobée sont sécants.

9. Catalyseur selon l'une des revendications précédentes caractérisé en ce que la forme polylobée comporte trois lobes.

10. Catalyseur selon l'une des revendications 3 à 8, caractérisé en ce que la forme polylobée comporte quatre lobes.

11. Catalyseur selon la revendication 10, caractérisé en ce que les lobes opposés de la forme quadrilobée précitée sont identiques en forme et en dimensions.

12. Catalyseur selon l'une des revendications précédentes, caractérisé en ce qu'il comprend au moins un canal longitudinal.

13. Catalyseur selon la revendication 12, caractérisé en ce qu'il comprend un canal central et un canal au centre de chaque lobe.

14. Catalyseur selon la revendication 1 caractérisé en ce qu'il se présente une forme cylindrique comprenant au moins un canal longitudinal.

15. Catalyseur selon l'une des revendications précédentes, caractérisé en ce que l'élément catalytiquement actif est un oxyde des éléments choisis dans le group comprenant, le titane, le cérium, le zirconium, l'aluminium.

16. Catalyseur selon l'une des revendications 1 à 14, caractérisé en ce qu'il contient de 0,5 à 100 % en poids d'élément catalytiquement actif (exprimé en oxyde), de prèference de 60 à 99 %.

17. Catalyseur selon l'une des revendications 1 à 14, caractérisé en ce qu'il comprend un sulfate d'alcalinoterreux ou un sulfate d'ammonium.

18. Catalyseur selon l'une des revendications 1 à 17, caractérisé en ce qu'il comprend au moins un composé choisi dans le groupe suivant : alumine, silice, argile, amiante, fibres céramiques.

19. Catalyseur selon l'une des revendications 1 à 18, caractérise en ce qu'il comprend au moins un oxyde d'un métal choisi dans le groupe comprenant le cérium, le zirconium, le molybdène, le cobalt, le silicium, les terres rares trivalentes, le nickel, le fer, l'étain, l'aluminium et le titane.

20. Catalyseur selon l'une des revendications 1 à 19, caractérisé en ce que l'élément catalytiquement actif est imprégné sur un support choisi dans le groupe comprenant l'alumine, la silice, l'oxyde de cérium, l'oxyde de zirconium, l'oxyde de titane.

21. Utilisation du catalyseur selon l'une des revendications précédentes pour traiter des gaz contenant de l'hydrogène sulfureux ou des composés carbonés du soufre en vue de la production de soufre élémentaire par oxydation directe de l'hydrogène sulfure.

22. Utilisation du catalyseur selon l'une des revendications 1 à 20 pour traiter des gaz contenant de l'hydrogène sulfureux ou des composés carbones du soufre en vue de leur oxydation en $SO_2$ et/ou $SO_3$.

23. Procédé de traitement d'un gaz contenant des composés soufrés selon la revendication 21 par passage d'un gaz sur un lit de catalyse constitué de particules de catalyseur caractérisé en ce qu'au moins une partie des particules de catalyseur est constituée par le catalyseur selon l'une des revendications 1 à 20.

24. Procédé de traitement d'un gaz contenant des composés organiques du soufre selon la revendication 22, par passage du gaz sur un lit de catalyseur constitue de particules de catalyseur caractérisé en ce qu'au moins une partie des particules de catalyseur est constituée par le catalyseur selon l'une des revendications 1 à 20.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | EP-A-0 322 291 (RHONE POULENC CHIMIE) <br> * En entier * <br> --- | 1,24 | B 01 D 53/36 <br> B 01 J 35/02 <br> C 01 B 17/04 |
| D,Y | EP-A-0 115 449 (RHONE-POULENC) <br> * En entier * | 1,3 | |
| D,A | | 15,24 | |
| | --- | | |
| D,Y <br> D,A | EP-A-0 244 301 (RHONE-POULENC) | 1,3 <br> 9,10,15 <br> ,24 | |
| | --- | | |
| A | US-A-4 495 307 (PORTER CLEMENTS) <br> * Figure 2; colonne 2, ligne 16 - colonne 3, ligne 48 * <br> --- | 1,7-9, <br> 15,24 | |
| A | FR-A-2 295 117 (AMERICAN CYANAMID CO.) <br> * Figures 4-6; Revendications; exemples * <br> ----- | 1,6,8, <br> 11 | |

| | | | DOMAINES TECHNIQUES RECHERCHES (Int. Cl.5) |
|---|---|---|---|
| | | | B 01 D <br> B 01 J <br> C 01 B |

Le présent rapport a été établi pour toutes les revendications

| Lieu de la recherche | Date d'achèvement de la recherche | Examinateur |
|---|---|---|
| LA HAYE | 04-12-1989 | BOGAERTS M.L.M. |